# EUROPEAN PATENT APPLICATION

(11) **EP 4 059 978 A1**
(43) Date of publication of application: **21.09.2022**
(21) Application number: 20886882.8
(22) Date of filing: 29.10.2020
(51) Int. Cl.: C08G 59/56, C08K 7/02, C08L 63/00

(54) **CURABLE COMPOSITION, CURED OBJECT, FIBER-REINFORCED COMPOSITE MATERIAL, AND MOLDED ARTICLE AND PRODUCTION METHOD THEREFOR**

(30) Priority: 14.11.2019 JP 2019206214
(71) Applicant: DIC Corporation, Tokyo 174-8520 (JP)
(72) Inventor: KAWASAKI, Akito, Ichihara-shi, Chiba 290-8585 (JP); KIMURA, Makoto, Ichihara-shi, Chiba 290-8585 (JP); MORINAGA, Kunihiro, Ichihara-shi, Chiba 290-8585 (JP)
(74) Representative: TBK
(86) International application number: PCT/JP2020/040553
(87) International publication number: WO 2021/095534

(57) **Abstract**

Provided are a curable composition which is rapidly curable and which gives cured products with good heat resistance, a cured product thereof, a fiber-reinforced composite material, a fiber-reinforced resin-molded article, and a method for manufacturing the fiber-reinforced resin-molded article. Provided are a curable composition containing an epoxy resin (A), an aliphatic and/or alicyclic amine compound (B), and an imidazole compound (C), wherein the ratio H/E of the number of moles H of active hydrogen in the aliphatic and/or alicyclic amine compound (B) to the number of moles E of an epoxy group in the epoxy resin (A) is in the range of 0.2 to 0.9; a cured product thereof; a fiber-reinforced composite material; a fiber-reinforced resin-molded article; and a method for manufacturing the fiber-reinforced resin-molded article.

## Description

### Technical Field

The present invention relates to a curable composition which is rapidly curable and which gives cured products with good heat resistance, a cured product thereof, a fiber-reinforced composite material, a fiber-reinforced resin-molded article, and a method for manufacturing the fiber-reinforced resin-molded article.

### Background Art

Fiber-reinforced composite materials containing carbon fibers, aramid fibers, or the like used as reinforcing fibers take advantage of high specific strength and specific modulus of elasticity and are widely used in general industrial applications such as automobiles and windmills, aerospace industry applications, and sports applications.
In recent years, the fiber-reinforced composite materials have been under active development for metal weight reduction.

Thermosetting resins such as unsaturated polyester resins, vinyl ester resins, and epoxy resins are mainly used as matrix resins for the fiber-reinforced composite materials. Among these, a cured product obtained from a curable composition containing an epoxy resin has excellent heat resistance, high strength, high modulus of elasticity, adhesion, chemical resistance, and good formability and is therefore being put to practical use in various applications as a fiber-reinforced composite material.

As a method for manufacturing a fiber-reinforced composite material, an autoclave method, a filament winding method, a pultrusion method, a resin transfer molding (RTM) method, a press molding method, or the like is appropriately selected. Among these manufacturing methods, the RTM method, in which liquid resin is used, is being actively put to practical use in industrial applications such as automobiles and aircrafts.

In particular, in an epoxy resin composition containing an aromatic amine-based curing component and used particularly in an aircraft field, blending an epoxy resin, a specific aromatic diamine, a monocyclic polyvalent phenol compound, and an alcohol compound having a main chain composed of two to six carbon atoms and two or more hydroxy groups at a specific ratio is provided from a viewpoint that a cured product that is obtained is excellent in heat resistance and the like (refer to, for example, Patent Literature 1). However, advanced requirements, particularly requirements to combine rapid curability and the heat resistance of a cured product are not sufficiently met and further improvements are required.

### Citation List

### Patent Literature

PTL 1: Japanese Unexamined Patent Application Publication No. 2014-227473

### Summary of Invention

### Technical Problem

Accordingly, a problem to be solved by the present invention is to provide a curable composition which is rapidly curable and which gives cured products with good heat resistance, a cured product thereof, a fiber-reinforced composite material, a fiber-reinforced resin-molded article, and a method for manufacturing the fiber-reinforced resin-molded article.

### Solution to Problem

The inventors have performed intensive investigations to solve the above problem and, as a result, have found that the problem can be solved in such a manner that an aliphatic amine compound, an alicyclic amine compound, and an imidazole compound are used in combination as a curing agent for epoxy resin compositions and an epoxy resin is used such that an epoxy group is in excess, although, hitherto, an epoxy resin and an amine compound have been blended such that an epoxy group in the epoxy resin and active hydrogen in the amine compound are in equal proportions or active hydrogen is in slightly larger proportion, leading to the completion of the present invention.

That is, the present invention provides a curable composition containing an epoxy resin (A), an aliphatic and/or alicyclic amine compound (B), and an imidazole compound (C). The ratio H/E of the number of moles H of active hydrogen in the aliphatic and/or alicyclic amine compound (B) to the number of moles E of an epoxy group in the epoxy resin (A) is in the range of 0.2 to 0.9.

Furthermore, the present invention provides a cured product of the curable composition, a fiber-reinforced composite material obtained using the curable composition, a fiber-reinforced resin-molded article, and a method for manufacturing the fiber-reinforced resin-molded article. Advantageous Effects of Invention

According to the present invention, a curable composition which is rapidly curable and which gives cured products with good heat resistance, a cured product thereof, a fiber-reinforced composite material, a fiber-reinforced resin-molded article, and a method for manufacturing the fiber-reinforced resin-molded article can be provided. Description of Embodiments

A curable composition of the present invention contains an epoxy resin (A), an aliphatic and/or alicyclic amine compound (B), and an imidazole compound (C). The ratio H/E of the number of moles H of active hydrogen in the aliphatic and/or alicyclic amine compound (B) to the number of moles E of an epoxy group in the epoxy resin (A) is in the range of 0.2 to 0.9.

The epoxy resin (A) is not particularly limited and various compounds can be used. The epoxy resin (A) may be used alone or in combination. Some of specific examples of the epoxy resin (A) include diglycidyloxybenzene, diglycidyloxynaphthalene, an aliphatic epoxy resin, a biphenol-type epoxy resin, a bisphenol-type epoxy resin, a novolac epoxy resin, a triphenolmethane-type epoxy resin, a tetraphenolethane-type epoxy resin, a phenol or naphthol aralkyl-type epoxy resin, a phenylene or naphthylene ether-type epoxy resin, a dicyclopentadiene-phenol addition reaction-type epoxy resin, a phenolic hydroxyl group-containing compound-alkoxy group-containing aromatic compound co-condensation-type epoxy resin, a glycidylamine-type epoxy resin, and a naphthalene skeleton-containing epoxy resin other than these.

Examples of the aliphatic epoxy resin include glycidyl etherification products of various aliphatic polyol compounds. Examples of the aliphatic polyol compounds include aliphatic diol compounds such as ethylene glycol, propylene glycol, 1,3-propanediol, 2-methylpropanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl-1,5-pentanediol, neopentyl glycol, 1,6-hexanediol, 1,4-bis(hydroxymethyl)cyclohexane, and 2,2,4-trimethyl-1,3-pentanediol; tri- and higher functional aliphatic polyol compounds such as trimethylolethane, trimethylolpropane, glycerol, hexanetriol, pentaerythritol, ditrimethylolpropane, and dipentaerythritol; and the like. In particular, glycidyl etherification products of the aliphatic diol compounds are preferable because the curable composition gives cured products with more excellent mechanical strength.

Examples of the biphenol-type epoxy resin include those made by polyglycidyl-etherifying one or more of biphenol compounds such as biphenol and tetramethylbiphenol with an epihalohydrin. In particular, those having an epoxy equivalent in the range of 150 g/eq to 200 g/eq are preferable.

Examples of the bisphenol-type epoxy resin include those made by polyglycidyl-etherifying one or more of bisphenol compounds such as bisphenol A, bisphenol F, and bisphenol S with an epihalohydrin. In particular, those having an epoxy equivalent in the range of 158 g/eq to 200 g/eq are preferable.

Examples of the novolac epoxy resin include those made by polyglycidyl-etherifying novolac resins made from one or more of various phenol compounds such as phenol, dihydroxybenzene, cresol, xylenol, naphthol, dihydroxynaphthalene, bisphenol, and biphenol with an epihalohydrin.

Examples of the triphenolmethane-type epoxy resin include those having a structural moiety represented by Structural Formula (1) below as a repeating structural unit.

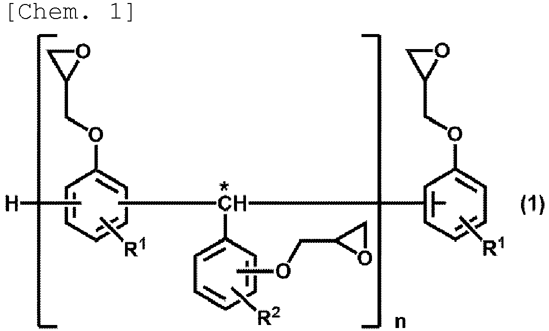

[In the formula, R¹ and R² are independently a hydrogen atom or a bonding site that connects to a structural moiety represented by Structural Formula (1) via a methine group marked with an asterisk and n is an integer of 1 or more.]

Examples of the phenol or naphthol aralkyl-type epoxy resin include those having a glycidyloxybenzene or glycidyloxynaphthalene structure which has a molecular structure knotted at a structural moiety represented by any of Structural Formulas (2-1) to (2-3) below. 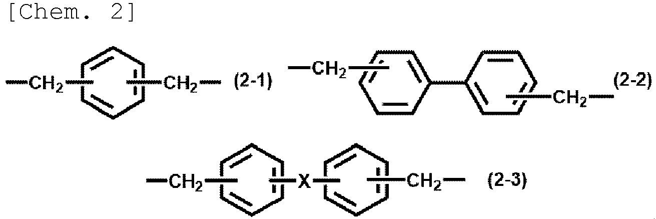 (In the formula, X is any of an alkylene group containing two to six carbon atoms, an ether bond, a carbonyl group, a carbonyloxy group, a sulfide group, and a sulfone group.]

Examples of the glycidylamine-type epoxy resin include N,N-diglycidylaniline, 4,4'-methylenebis[N,N-diglycidylaniline], triglycidylaminophenol, N,N,N',N'-tetraglycidylxylylenediamine.

An example of the naphthalene skeleton-containing epoxy resin is a bis(hydroxynaphthalene)-type epoxy resin represented by any of Structural Formulas (3-1) to (3-3) below.

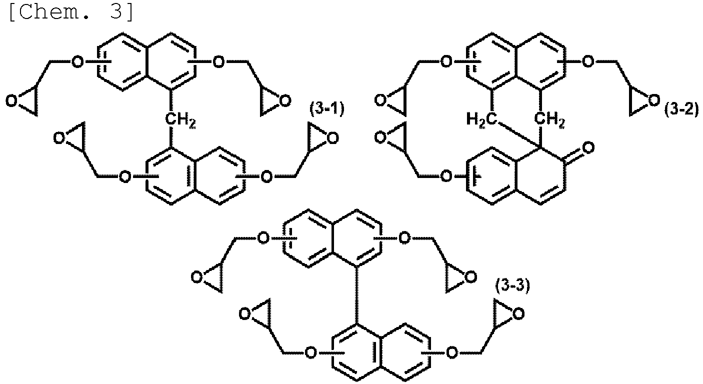

Among the epoxy resin (A), any of the aliphatic epoxy resin, the bisphenol-type epoxy resin, the triphenolmethane-type epoxy resin, the glycidylamine-type epoxy resin, and the bis(hydroxynaphthalene)-type epoxy resin represented by any of Structural Formulas (3-1) to (3-3) is preferably used because the curable composition which gives cured products with an excellent balance between heat resistance and mechanical strength is obtained. Among these, the bisphenol-type epoxy resin is particularly preferable. The amount of the bisphenol-type epoxy resin used is preferably 40% by mass or more of the mass of the epoxy resin (A). Further, the bisphenol-type epoxy resin and the aliphatic epoxy resin are preferably used in combination because cured products are more excellent in heat resistance and mechanical strength. In this case, the mass ratio of the bisphenol-type epoxy resin to the aliphatic epoxy resin is preferably in the range of 70/30 to 99/1. When the aliphatic epoxy resin is used, the proportion of the aliphatic epoxy resin with respect to the mass of the epoxy resin (A) is preferably in the range of 1% to 30% by mass. When the triphenolmethane-type epoxy resin is used, the triphenolmethane-type epoxy resin is preferably used in the range of 5% to 50% by mass with respect to the mass of the epoxy resin (A). When the glycidylamine-type epoxy resin is used, the glycidylamine-type epoxy resin is preferably used in the range of 5% to 50% by mass with respect to the mass of the epoxy resin (A). When the bis(hydroxynaphthalene)-type epoxy resin is used, the bis(hydroxynaphthalene)-type epoxy resin is preferably used in the range of 1% to 30% by mass with respect to the mass of the epoxy resin (A).

In particular, when used as a fiber-reinforced composite material described below, the epoxy equivalent of the epoxy resin (A) is in the range of 165 g/eq to 190 g/eq and the viscosity thereof at 25 °C is preferably in the range of 1,000 mPa·s to 100,000 mPa·s and particularly preferably in the range of 2,000 mPa·s to 11,000 mPa·s from the viewpoint of the curability of a composition, the fluidity thereof, and the impregnation of reinforcing fibers.

The aliphatic and/or alicyclic amine compound (B) is used as a curing agent for the epoxy resin (A). In the present invention, the aliphatic amine compound or the alicyclic amine compound is one in which a carbon atom bonded to an amino group has no aromaticity and may be a compound having an aromatic ring in a structure.

The aliphatic and/or alicyclic amine compound (B) is an amine containing one or more active hydrogen in a single molecule and an aliphatic or alicyclic amine is used from the viewpoint of rapid curability. In particular, a polyamine containing two or more active hydrogen in a single molecule is preferable from the viewpoint of the heat resistance of cured products.

Examples of the aliphatic amine compound include alkylenediamines such as ethylenediamine, 1,2-diaminopropane, 1,3-diaminopropane, 1,3-diaminobutane, and 1,4-diaminobutane; polyalkylpolyamines such as diethylenetriamine, triethylenetetramine, and tetraethylenepentamine; N,N-dimethylaminopropylamine, N,N-diethylaminopropylamine, N,N-diisopropylaminopropylamine, N,N-diallylaminopropylamine, N,N-bisaminopropylallylamine, bis[3-(N,N-dimethylaminopropyl)]amine, bis[3-(N,N-diethylaminopropyl)]amine, bis[3-(N,N-diisopropylaminopropyl)]amine, bis[3-(N,N-dibutylaminopropyl)]amine, N,N-dimethylaminoethylamine, N,N-diethylaminoethylamine, N,N-diisopropylaminoethylamine; N,N-diallylaminoethylamine, N,N-(bisaminopropyl)-N-methylamine, N,N-bisaminopropylethylamine, N,N-bisaminopropylpropylamine, N,N-bisaminopropylbutylamine; N,N-bisaminopropylpentylamine, N,N-bisaminopropylhexylamine, N,N-bisaminopropyl-2-ethylhexylamine, N,N,N'-trimethylethylenediamine, N'-ethyl-N,N-dimethylethylenediamine, and N'-ethyl-N,N-dimethylpropanediamine; N,N-benzylmethylaminoethylamine, N,N-dibenzylaminoethylamine, N,N-benzylmethylaminopropylamine, N,N-dibenzylaminopropylamine; 4-(N,N-dimethylamino)benzylamine, 4-(N,N-diethylamino)benzylamine, 4-(N,N-diisopropylamino)benzylamine, N'-ethyl-N,N-dibenzylaminopropylamine, and N,N-bisaminopropylbenzylamine. These may be used alone or in combination.

Among these, diethylenetriamine, triethylenetetramine, or tetraethylenepentamine is preferably used and triethylenetetramine is particularly preferably used from the viewpoint of the viscosity of a composition combined with the epoxy resin (A), the rapid curability thereof, the mechanical strength of a cured product that is obtained.

Examples of the alicyclic amine compound include N,N-dimethylbisaminocyclohexane, 1,3-bis(aminomethyl)cyclohexane, 1,4-bis(aminomethyl)cyclohexane, 1,2-diaminocyclohexane, 1,4-diamino-3,6-diethylcyclohexane, N,N-cyclohexylmethylaminoethylamine, N,N-dicyclohexylaminoethylamine, N,N-cyclohexylmethylaminopropylamine, N,N-dicyclohexylaminopropylamine, N,N-bisaminopropylcyclohexylamine, isophoronediamine, and N,N-dimethylisophoronediamine. These may be used alone or in combination.

Among these, 1,3-bis(aminomethyl)cyclohexane, 1,4-bis(aminomethyl)cyclohexane, or isophoronediamine is preferably used and 1,3-bis(aminomethyl)cyclohexane or isophoronediamine is particularly preferably used from the viewpoint of the viscosity of a composition combined with the epoxy resin (A), the rapid curability thereof, the mechanical strength of the obtained cured product.

The following products can be used as the (B) component: polyepoxy addition-modified products produced by allowing the above-mentioned amine compounds to react with various epoxy resins such as glycidyl ethers including phenyl glycidyl ether, butyl glycidyl ether, bisphenol A-diglycidyl ether, and bisphenol F-diglycidyl ether or glycidyl esters of carboxylic acids; amidation-modified products produced by allowing these organic polyamines to react with carboxylic acids such as phthalic acid, isophthalic acid, and dimer acid; Mannich-modified products produced by allowing the polyamines to react with aldehydes such as formaldehyde; and Mannich-modified products produced by allowing phenols, such as phenol, cresol, xylenol, tertiary butylphenol, and resorcin, having at least one reactive site which can be aldehydated in a nucleus to react with the amine compounds.

In the curable composition of the present invention, it is essential that the blending ratio of the epoxy resin (A) and an amine compound (B) is such that the ratio H/E of the number of moles H of active hydrogen in the aliphatic and/or alicyclic amine compound (B) to the number of moles E of epoxy in the epoxy resin (A) is in the range of 0.2 to 0.9. It is conceivable that using the epoxy resin (A) and the aliphatic and/or alicyclic amine compound (B) in this range in combination with the imidazole compound (C), which is described below, allows the addition reaction of an epoxy group with an amino group and the anionic polymerization of imidazole to proceed in parallel, so that rapid curability is exhibited and the heat resistance of cured products is good as a result different from that of an addition reaction in which the crosslinking of cured products is simple. In particular, when the ratio H/E is in the range of 0.3 to 0.8, the effect is more likely to be exhibited, which is preferable.

The imidazole compound (C), which is used in this invention, is not particularly limited. Examples of the imidazole compound (C) include imidazole, 1-methylimidazole, 2-methylimidazole, 1,2-dimethylimidazole, 2-ethyl-4-methylimidazole, 2-isopropylimidazole, 2-undecylimidazole, 2-heptadecylimidazole, 2-phenylimidazole, 2-phenyl-4-methylimidazole, and 2-aminopropylimidazole. These may be used alone or in combination. Among these, imidazole, 1-methylimidazole, 2-methylimidazole, 1,2-dimethylimidazole, or 2-ethyl-4-methylimidazole is preferably used from a viewpoint that a balance between rapid curability and the heat resistance of cured products is more excellent.

The usage ratio of the imidazole compound (C) is preferably in the range of 0.2 parts by mass to four parts by mass and particularly preferably 0.3 parts by mass to three parts by mass with respect to 100 parts by mass of the epoxy resin (A) from the viewpoint of rapid curability.

The curable composition of the present invention is such that the epoxy resin (A) and the aliphatic and/or alicyclic amine compound (B) are used at a specific ratio and the imidazole compound (C) is essential. The curable composition may contain another component. As another component, for example, acid-modified polybutadiene, a polyether sulfone resin, a polycarbonate resin, a polyphenylene ether resin, an acrylic resin, and the like can be cited.

The acid-modified polybutadiene is a component having reactivity with the epoxy resin (A). Using the epoxy resin (A) in combination with the acid-modified polybutadiene enables the obtained cured product to exhibit excellent mechanical strength, heat resistance, and moist heat resistance.

Examples of the acid-modified polybutadiene include those having a butadiene skeleton derived from 1,3-butadiene or 2-methyl-1,3-butadiene. Examples of those derived from 1,3-butadiene include those having any of 1,2-vinyl type, 1,4-trans type, and 1,4-cis type structures and those having two or more of these structures. Examples of those derived from 2-methyl-1,3-butadiene include those having any of 1,2-vinyl type, 3,4-vinyl type, 1,4-cis type, and 1,4-trans type structures and those having two or more of these structures.

An acid-modifying component of the acid-modified polybutadiene is not particularly limited and an unsaturated carboxylic acid can be cited. The unsaturated carboxylic acid is preferably acrylic acid, methacrylic acid, maleic acid, maleic anhydride, itaconic acid, or itaconic anhydride. The unsaturated carboxylic acid is preferably itaconic anhydride or maleic anhydride and more preferably maleic anhydride from the viewpoint of reactivity.

For the content of the unsaturated carboxylic acid in the acid-modified polybutadiene, when the acid-modified polybutadiene is composed of one derived from 1,3-butadiene, the acid value thereof is preferably 5 mgKOH/g to 400 mgKOH/g, more preferably 20 mgKOH/g to 300 mgKOH/g, and further more preferably 50 mgKOH/g to 200 mgKOH/g from the viewpoint of reactivity with the epoxy resin (A). Further, the unsaturated carboxylic acid component may be copolymerized in the acid-modified polybutadiene, and the form thereof is not limited. For example, random copolymerization, block copolymerization, graft copolymerization (graft modification) and the like are cited. The weight average molecular weight (Mw) of the acid-modified polybutadiene is preferably in the range of 1,000 to 100,000.

The acid-modified polybutadiene is obtained by modifying polybutadiene with the unsaturated carboxylic acid. A commercially available product may be used as it is. Commercially available products that can be used are, for example, maleic anhydride-modified liquid polybutadiene (polyvest MA75, Polyvest EP MA120, or the like) produced by Evonik Degussa Gmbh, maleic anhydride-modified polyisoprene (LIR-403, LIR-410) produced by Kuraray Co., Ltd., and the like.

Supposing that the total mass of resin components of the curable composition is 100 parts by mass, the content of the acid-modified polybutadiene in the curable composition is preferably in the proportion of one part by mass to 40 parts by mass and more preferably in the proportion of three parts by mass to 30 parts by mass from a viewpoint that the obtained cured product is excellent in elongation, heat resistance, and moisture heat resistance.

The polyether sulfone resin, which is a thermoplastic resin and is not included in a crosslinking network in the curing reaction of the curable composition, allows the obtained cured product to exhibit more excellent mechanical strength and heat resistance due to an excellent effect of a modifier having high Tg.

Supposing that the total mass of the resin components of the curable composition is 100 parts by mass, the content of the polyether sulfone resin in the curable composition is preferably in the proportion of one part by mass to 30 parts by mass and more preferably in the proportion of three parts by mass to 20 parts by mass from a viewpoint that the obtained cured product is excellent in mechanical strength and heat resistance.

The polycarbonate resin is, for example, a polycondensate of a divalent or bifunctional phenol and a carbonyl halide or a polymer made by polymerizing a divalent or bifunctional phenol and a carbonic acid diester by a transesterification method.

Examples of the divalent or bifunctional phenol include 4,4'-dihydroxybiphenyl, bis(4-hydroxyphenyl) methane, 1,1-bis(4-hydroxyphenyl)ethane, 2,2-bis(4-hydroxyphenyl)propane, 2,2-bis(3-methyl-4-hydroxyphenyl)propane, 2,2-bis(3,5-dimethyl-4-hydroxyphenyl)propane, 1,1-bis(4-hydroxyphenyl)cyclohexane, bis(4-hydroxyphenyl) ether, bis(4-hydroxyphenyl) sulfide, bis(4-hydroxyphenyl) sulfone, bis(4-hydroxyphenyl) sulfoxide, bis(4-hydroxyphenyl) ketone, hydroquinone, resorcin, and catechol. Among these divalent phenols, bis(hydroxyphenyl)alkanes are preferable and, furthermore, those obtained using 2,2-bis(4-hydroxyphenyl)propane as a main raw material are particularly preferable.

On the other hand, examples of carbonyl halides or carbonic acid diesters that are allowed to react with divalent or bifunctional phenols include phosgene; diaryl carbonates such as dihaloformates of divalent phenols, diphenyl carbonate, ditolyl carbonate, bis(chlorophenyl) carbonate, and m-cresyl carbonate; and aliphatic carbonate compounds such as dimethyl carbonate, diethyl carbonate, diisopropyl carbonate, dibutyl carbonate, diamyl carbonate, and dioctyl carbonate.

The polycarbonate resin is one in which a molecular structure of a polymer chain thereof is a linear structure and may have a branched structure. Such a branched structure can be introduced using 1,1,1-tris(4-hydroxyphenyl)ethane, α,α',α"-tris(4-hydroxyphenyl)-1,3,5-triisopropylbenzene, phloroglucin, trimellitic acid, isatin bis(o-cresol), or the like as a raw material component.

Examples of the polyphenylene ether resin include poly(2,6-dimethyl-1,4-phenylene) ether, poly(2-methyl-6-ethyl-1,4-phenylene) ether, poly(2,6-diethyl-1,4-phenylene) ether, poly(2-ethyl-6-n-propyl-1,4-phenylene) ether, poly(2,6-di-n-propyl-1,4-phenylene) ether, poly(2-methyl-6-n-butyl-1,4-phenylene) ether, poly(2-ethyl-6-isopropyl-1,4-phenylene) ether, and poly(2-methyl-6-hydroxyethyl-1,4-phenylene) ether.

Among these, poly(2,6-dimethyl-1,4-phenylene) ether is preferable. A polyphenylene ether containing 2-(dialkylaminomethyl)-6-methylphenylene ether unit, 2-(N-alkyl-N-phenylaminomethyl)-6-methylphenylene ether unit, or the like as a partial structure may be used.

The polyphenylene ether resin used may be a modified polyphenylene ether resin having a reactive functional group, such as a carboxyl group, an epoxy group, an amino group, a mercapto group, a silyl group, a hydroxyl group, or a dicarboxyl anhydride group, introduced into a resin structure thereof by any method such as a graft reaction or copolymerization unless an object of the present invention is impaired.

The acrylic resin can be added for the purpose of improving the mechanical strength of cured products, particularly the fracture toughness thereof.

A constituent monomer of the acrylic resin, a polymerization method, and the like are appropriately selected in accordance with desired performance. Some of specific examples of the constituent monomer include (meth)acrylic acid alkyl esters such as methyl (meth)acrylate, ethyl (meth)acrylate, butyl (meth)acrylate, and 2-ethylhexyl (meth)acrylate; (meth)acrylic acid esters, such as cyclohexyl (meth)acrylate and cyclohexyl methacrylate, having an alicyclic structure; (meth)acrylic acid ester, such as benzyl (meth)acrylate, having an aromatic ring; (meth)acrylic acid (fluoro)alkyl esters such as 2-trifluoroethyl (meth)acrylate; acid group-containing monomers such as (meth)acrylic acid, maleic acid (anhydride), and maleic anhydride; hydroxy group-containing monomers such as hydroxyethyl (meth)acrylate, hydroxypropyl (meth)acrylate, and hydroxybutyl (meth)acrylate; epoxy group-containing monomers such as glycidyl (meth)acrylate and 3,4-epoxycyclohexylmethyl methacrylate; aromatic vinyl compounds such as styrene; and diene compounds such as butadiene and isoprene. In particular, an acrylic resin mainly containing a (meth)acrylic acid alkyl ester is preferable because the curable composition gives cured products with more excellent mechanical strength.

The acrylic resin is preferably a block copolymer made by copolymerizing a plurality of block polymers having different monomer configurations. The block copolymer is an A-B type of diblock type or an A-B-A type or A-B-C type of triblock type. In particular, the acrylic resin preferably has both a block mainly containing methyl (meth)acrylate and a block mainly containing butyl (meth)acrylate because the curable composition gives cured products with more excellent mechanical strength. More specifically, a triblock-type acrylic resin composed of polymethyl methacrylate block-polybutyl acrylate block-polymethyl methacrylate block and a diblock-type acrylic resin composed of polymethyl methacrylate block-polybutyl acrylate block are preferable and the diblock-type acrylate resin is particularly preferable. The weight average molecular weight (Mw) of the acrylic resin is preferably in the range of 1,000 to 500,000.

The content of the acrylic resin in the curable composition is not particularly limited and is appropriately adjusted depending on the desired performance of cured products and the like. In particular, supposing that the total mass of the resin components of the curable composition is 100 parts by mass, the content thereof is preferably in the range of 0.1 parts by mass to 20 parts by mass and more preferably in the range of 0.5 parts by mass to 10 parts by mass because the curable composition gives cured products with more excellent mechanical strength.

The curable composition of the present invention may contain a flame retardant/flame retardant aid, a filler, an additive, an organic solvent, and the like unless an effect of the present invention is impaired. The order of blending for producing the curable composition is not particularly limited if an effect of the present invention can be achieved. That is, components may be used in such a manner that all the components are mixed in advance or the components are mixed in an appropriate order. In a blending method, for example, a kneading machine such as an extruder, a heating roll, a kneader, a roller mixer, or a Banbury mixer can be used to perform kneading production. Various members that may be contained in the curable composition of the present invention are described below.

### • Flame Retardant/Flame Retardant Aid

The curable composition of the present invention may contain a non-halogen flame retardant which contains substantially no halogen atom in order to exhibit flame retardancy.

Examples of the non-halogen flame retardant include a phosphorus flame retardant, a nitrogen flame retardant, a silicone flame retardant, an inorganic flame retardant, and an organometallic salt flame retardant. These are not in any way limited in use and may be used alone. The same type of flame retardants may be used or different types of flame retardants may be used in combination.

The phosphorus flame retardant used may be of an inorganic type or an organic type. Examples of an inorganic compound include red phosphorus; ammonium phosphates such as monoammonium phosphate, diammonium phosphate, triammonium phosphate, and ammonium polyphosphate; and inorganic nitrogen-containing phosphorus compounds such as phosphoramide.

The red phosphorus is preferably surface-treated for the purpose of preventing hydrolysis and the like. Examples of a surface treatment method include (i) a method of coating with an inorganic compound such as magnesium hydroxide, aluminium hydroxide, zinc hydroxide, titanium hydroxide, bismuth oxide, bismuth hydroxide, bismuth nitrate, or a mixture thereof; (ii) a method of coating with a mixture of an inorganic compound such as magnesium hydroxide, aluminium hydroxide, zinc hydroxide, or titanium hydroxide and a thermosetting resin such as phenol resin; and (iii) a method of double coating with a coating film of an inorganic compound such as magnesium hydroxide, aluminium hydroxide, zinc hydroxide, or titanium hydroxide and a thermosetting resin such as a phenol resin.

Examples of an organic phosphorus compound include general-purpose organic phosphorus compounds such as phosphoric acid ester compounds, phosphonic acid compounds, phosphinic acid compounds, phosphine oxide compounds, phospholan compounds, and organic nitrogen-containing phosphorus compounds and cyclic organic phosphorus compounds such as 9,10-dihydro-9-oxa-10-phosphaphenanthrene=10-oxide, 10-(2,5-dihydroxyphenyl)-10H-9-oxa-10-phosphaphenanthrene=10-oxide, and 10-(2,7-dihydroxynaphthyl)-10H-9-oxa-10-phosphaphenanthrene=10-oxide.

When the phosphorus flame retardant is used, hydrotalcite, magnesium hydroxide, a boron compound, zirconium oxide, a black dye, calcium carbonate, zeolite, zinc molybdate, activated carbon, or the like may be used in combination with the phosphorus flame retardant.

Examples of the nitrogen flame retardant include triazine compounds, cyanuric acid compounds, isocyanuric acid compounds, and phenothiazine. The triazine compounds, the cyanuric acid compounds, and the isocyanuric acid compounds are preferable.

Examples of the triazine compounds include melamine, acetoguanamine, benzoguanamine, melon, melam, succinoguanamine, ethylenedimelamine, melamine polyphosphate, and triguanamine, and also include aminotriazine sulfate compounds such as guanylmelamine sulfate, melem sulfate, and melam sulfate; an aminotriazine-modified phenol resin; and one obtained by further modifying the aminotriazine-modified phenol resin with tung oil, isomerized linseed oil, or the like.

As specific examples of the cyanuric acid compounds, for example, cyanuric acid and melamine cyanuric acid can be cited.

The blending amount of the nitrogen flame retardant is appropriately selected depending on the type of the nitrogen flame retardant, other components of the curable composition, and the desired degree of flame retardancy.
The nitrogen flame retardant is preferably blended in the range of 0.05 parts by mass to 10 parts by mass and particularly preferably in the range of 0.1 parts by mass to five parts by mass with respect to, for example, 100 parts by mass of the total resin components of the curable composition.

When the nitrogen flame retardant is used, a metal hydroxide, a molybdenum compound, or the like may be used in combination with the nitrogen flame retardant.

The silicone flame retardant can be used without any particular limitation and may be an organic compound containing a silicon atom. Examples of the silicone flame retardant include silicone oil, silicone rubber, and silicone resins.

The blending amount of the silicone flame retardant is appropriately selected depending on the type of the silicone flame retardant, other components of the curable composition, or the desired degree of flame retardancy. The silicone flame retardant is preferably blended in the range of 0.05 parts by mass to 20 parts by mass by mass with respect to, for example, 100 parts by mass of the total resin components of the curable composition. When the silicone flame retardant is used, a molybdenum compound, alumina, or the like may be used in combination with the silicone flame retardant.

Examples of the inorganic flame retardant include metal hydroxides, metal oxides, metal carbonate compounds, metal powders, boron compounds, and low-melting point glass.

As specific examples of the metal hydroxides, for example, aluminium hydroxide, magnesium hydroxide, dolomite, hydrotalcite, calcium hydroxide, barium hydroxide, zirconium hydroxide, and the like can be cited.

As specific examples of the metal oxides, for example, zinc molybdate, molybdenum trioxide, zinc stannate, tin oxide, aluminium oxide, iron oxide, titanium oxide, manganese oxide, zirconium oxide, zinc oxide, molybdenum oxide, cobalt oxide, bismuth oxide, chromium oxide, nickel oxide, copper oxide, tungsten oxide, and the like can be cited.

As specific examples of the metal carbonate compounds, for example, zinc carbonate, magnesium carbonate, calcium carbonate, barium carbonate, basic magnesium carbonate, aluminium carbonate, iron carbonate, cobalt carbonate, titanium carbonate, and the like can be cited.

As specific examples of the metal powders, for example, aluminium, iron, titanium, manganese, zinc, molybdenum, cobalt, bismuth, chromium, nickel, copper, tungsten, tin, and the like can be cited.

As specific examples of the boron compound, for example, zinc borate, zinc metaborate, barium metaborate, boric acid, borax, and the like can be cited.

As specific examples of the low-melting point glass, for example, CEEPREE (Bokusui Brown Co., Ltd.), hydrated glass SiO₂-MgO-H₂O, and glassy compounds such as PbO-B₂O₃, ZnO-P₂O₅-MgO, P₂O₅-B₂O₃-PbO-MgO, P-Sn-O-F, PbO-V₂O₅-TeO₂, Al₂O₃-H₂O, lead borosilicate compounds, and the like can be cited.

The blending amount of the inorganic flame retardant is appropriately selected depending on the type of the inorganic flame retardant, other components of the curable composition, and the desired degree of flame retardancy.
The inorganic flame retardant is preferably blended in the range of 0.05 parts by mass to 20 parts by mass and particularly preferably in the range of 0.5 parts by mass to 15 parts by mass with respect to, for example, 100 parts by mass of the total resin components of the curable composition.

Examples of the organometallic salt flame retardant include ferrocene, an acetylacetonate metal complex, an organometallic carbonyl compound, an organic cobalt salt compound, an organic metal sulfonate, and a compound in which a metal atom and an aromatic compound or a heterocyclic compound are ionically or coordinately bonded.

The blending amount of the organometallic salt flame retardant is appropriately selected depending on the type of the organometallic salt flame retardant, other components of the curable composition, and the desired degree of flame retardancy. The organometallic salt flame retardant is preferably blended in the range of 0.005 parts by mass to 10 parts by mass with respect to, for example, 100 parts by mass of the total resin components of the curable composition.

### • Filler

The curable composition of the present invention may contain a filler. When the curable composition of the present invention contains the filler, the obtained cured product can exhibit excellent mechanical properties.

Examples of the filler include titanium oxide; glass beads; glass flakes; glass fibers; calcium carbonate; barium carbonate; calcium sulfate; barium sulfate; potassium titanate; aluminium borate; magnesium borate; fused silica; crystalline silica; alumina; silicon nitride; aluminium hydroxide; fibrous reinforcing agents such as kenaf fibers, carbon fibers, alumina fibers, and quartz fibers; and non-fibrous reinforcing agents. These may be used alone or in combination. These may be coated with an organic substance, an inorganic substance, or the like.

When glass fibers are used as a filler, those selected from long fiber-type rovings, short fiber-type chopped strands, milled fibers, and the like can be used. The glass fibers used are preferably those surface-treated for resin used. Blending the filler enables the strength of a nonflammable layer (or carbonized layer) formed during combustion to be further enhanced. The nonflammable layer (or carbonized layer) once formed during combustion is less likely to be damaged and can exhibit stable thermal insulation performance, thereby obtaining a larger flame retardant effect. Furthermore, high rigidity can be imparted to materials.

### • Additive

The curable composition of the present invention may contain an additive. When the curable composition of the present invention contains the additive, the obtained cured product have enhanced other characteristics such as rigidity and dimensional stability. As an additive, for example, a plasticizer, an oxidation inhibitor, an ultraviolet absorber, a stabilizer such as a light stabilizer, an antistatic agent, a conductivity-imparting agent, a stress reliever, a release agent, a crystallization accelerator, a hydrolysis inhibitor, a lubricant, an impact-imparting agent, a slidability improver, a compatibilizer, a nucleating agent, a strengthening agent, a reinforcing agent, a flow modifier, dye, a sensitizer, a coloring pigment, a rubbery polymer, a thickener, an anti-settling agent, an anti-sagging agent, an anti-foaming agent, a coupling agent, a rust preventive, an antibacterial/antifungal agent, an anti-fouling agent, a conductive polymer, and the like can be added.

### • Organic Solvent

In a case where a fiber-reinforced resin-molded article is manufactured by a filament winding method, the curable composition of the present invention may contain an organic solvent. Examples of the organic solvent, which can be used herein, include methyl ethyl ketone, acetone, dimethylformamide, methyl isobutyl ketone, methoxypropanol, cyclohexanone, methyl cellosolve, ethyl diglycol acetate, and propylene glycol monomethyl ether acetate. The selection or appropriate usage thereof can be appropriately determined depending on applications.

The curable composition of the present invention has a very high curing rate; exhibits a feature that the heat resistance and mechanical strength of cured products are excellent; and can be used for various applications such as paints, electric/electronic materials, adhesives, and molded articles. The curable composition of the present invention can be successfully used not only for applications in which the curable composition is used in such a manner that the curable composition is cured itself and but also for fiber-reinforced composite materials, fiber-reinforced resin-molded articles, and the like. These are described below.

### • Cured Product of Curable Composition

A method for obtaining a cured product from the curable composition of the present invention may be based on a method for curing a general epoxy resin composition. For example, heating temperature conditions may be appropriately selected depending on the type of a curing agent to be combined, applications, or the like. For example, a method for heating the curable composition in a temperature range of room temperature to about 250 °C is cited. A molding method used may be a general method for curable compositions. In particular, conditions specific to the curable composition of the present invention are unnecessary. The present invention is characteristic in that the glass transition temperature of the cured product can be adjusted to 160 °C or higher even if the curable composition of the present invention is subjected to a curing reaction only at 120 °C for five minutes. Cured products with excellent heat resistance can be obtained even under heating conditions milder than ever before.

### • Fiber-Reinforced Composite Material

A fiber-reinforced composite material of the present invention is material in an uncured state after reinforcing fibers are impregnated with the curable composition. Herein, the reinforcing fibers may be twisted yarns, untwisted yarns, non-twisted yarns, or the like. The untwisted yarns and the non-twisted yarns are preferable from a viewpoint that the fiber-reinforced composite material has excellent moldability. Further, a form of the reinforcing fibers used may be one in which fiber directions are aligned in one direction or a woven fabric. The woven fabric can be freely selected from plain weaves, satin weaves, and the like depending on portions used or applications. Specifically, carbon fibers, glass fibers, aramid fibers, boron fibers, alumina fibers, silicon carbide fibers, and the like are cited because these are excellent in mechanical strength and durability. These may be used in combination. Among these, the carbon fibers are particularly preferable because the strength of molded articles is good. For the carbon fibers, various carbon fibers such as polyacrylonitrile-based carbon fibers, pitch-based carbon fibers, and rayon-based carbon fibers can be used.

A method for obtaining the fiber-reinforced composite material from the curable composition of the present invention is not particularly limited. Examples of the method include a method in which varnish is produce by uniformly mixing components forming the curable composition and unidirectional reinforcing fibers prepared by aligning the reinforcing fibers in one direction are immersed in the varnish obtained above (an uncured state in a pultrusion method or a filament winding method) and a method in which woven fabrics of the reinforcing fibers are stacked and are set in a concave die, the concave die is sealed with a convex die, and resin is injected into the concave die, followed by pressure impregnation (an uncured state in an RTM method).

In the fiber-reinforced composite material of the present invention, an inner portion of a fiber bundle need not be impregnated with the curable composition. The fiber-reinforced composite material may be in such a form that the curable composition is localized near a surface of a fiber.

Further, in the fiber-reinforced composite material of the present invention, the volume content of the reinforcing fibers with respect to the total volume of the fiber-reinforced composite material is preferably 40% to 85% and is more preferably in the range of 50% to 70% from the viewpoint of strength. When the volume content is less than 40%, the content of the curable composition is too high and the flame retardancy of the obtained cured product is insufficient or characteristics required for fiber-reinforced composite materials with excellent specific modulus of elasticity and specific strength cannot be satisfied in some cases. When the volume content is more than 85%, the adhesion between the reinforcing fibers and a resin composition decreases in some cases.

### • Fiber-Reinforced Resin-Molded Article

A fiber-reinforced resin-molded article of the present invention is a molded article having the reinforcing fibers and a cured product of the curable composition and is obtained by heat-curing the fiber-reinforced composite material. Specifically, as the fiber-reinforced resin-molded article of the present invention, the volume content of the reinforcing fibers in the fiber-reinforced molded article is preferably in the range of 40% to 85% and particularly preferably 50% to 70% from the viewpoint of strength. Examples of the fiber-reinforced resin-molded article include automobile parts such as front subframes, rear subframes, front pillars, center pillars, side members, cross members, side sills, roof rails, and propeller shafts; core members of electric wire cables; pipe members for submarine oil fields; roll/pipe members for printing machines; robot fork members, and primary and secondary structural members of aircrafts.

A method for obtaining the fiber-reinforced molded article from the curable composition of the present invention is not particularly limited. A pultrusion molding method (pultrusion method), a filament winding method, an RTM method, or the like is preferably used. The pultrusion molding method (pultrusion method) is a method in which a fiber-reinforced resin-molded article is formed in such a manner that a fiber-reinforced composite material is introduced into a mold, is heat-cured, and is then drawn with a drawing machine. The filament winding method is a method in which a fiber-reinforced resin-molded article is formed in such a manner that a fiber-reinforced composite material (containing unidirectional fibers) is wound around an aluminium liner, a plastic liner, or the like which is being rotated and is then heat-cured. The RTM method is a method in which two types of dies, a concave die and a convex die, are used and in which a fiber-reinforced resin-molded article is formed in such a manner that a fiber-reinforced composite material is heat-cured in the die. When a large product or a fiber-reinforced resin-molded article with a complicated shape is formed, the RTM method is preferably used.

For molding conditions for the fiber-reinforced resin-molded article, the fiber-reinforced composite material is preferably heat-cured and molded in a temperature range of 50 °C to 250 °C and is more preferably molded in a temperature range of 70 °C to 220 °C. This is because when the molding temperature is too low, sufficient rapid curability is not obtained in some cases and, in contrast, when the molding temperature is too high, warpage due to thermal strain is likely to occur in some cases. For other molding conditions, the following method can be cited: a method in which the fiber-reinforced composite material is cured in two steps in such a manner that the fiber-reinforced composite material is pre-cured at 50 °C to 100 °C into a tack-free cured product, which is further treated at a temperature of 120 °C to 200 °C.

Other methods for obtaining the fiber-reinforced molded article from the curable composition of the present invention include a hand lay-up or spray-up method in which fiber aggregates are laid on a mold and the varnish and fiber aggregates are multiply layered; a vacuum bag method in which either a male or female die is used, base materials made of reinforcing fibers are stacked with the base materials being impregnated with varnish and are molded, and a molded article is covered with a flexible die that can apply pressure to the molded article, is airtightly sealed, and is vacuum- (decompression-) molded; and an SMC press method in which varnish containing reinforcing fibers is formed into a sheet in advance and the sheet is compression-molded in a mold.

### EXAMPLES

Next, the present invention are described in detail with reference to examples and comparative examples. Hereinafter, "parts" and "%" are on a mass basis unless otherwise specified.

### Examples 1 to 10 and Comparative Examples 1 to 8

Components were blended in accordance with blends shown in Tables 1 and 2 below and were uniformly mixed by stirring, whereby curable compositions were obtained. The curable compositions were subjected to various evaluation tests in accordance with procedures below. Results are shown in Tables 1 and 2.

Components used in the examples and the comparative examples are as described below.

### <Epoxy resin>

840S: "EPICLON 840S" produced by DIC Corporation Bisphenol A epoxy resin, an epoxy group equivalent of 184 g/equivalent

### <Amine compounds>

TETA: Triethylenetetramine
1,3-BAC: 1,3-bis(aminomethyl)cyclohexane
IPDA: Isophorone diamine
DETDA: Diethyl toluenediamine
<Imidazole compounds>
1,2-DMZ: 1,2-dimethylimidazole
2E4MZ: 2-ethyl-4-methylimidazole

### <Measurement of Gel Time>

Immediately after components were blended in a proportion shown in Table 1 or 2, 0.15 g of each curable composition was placed on a hotplate heated to 120 °C and the time (seconds) taken for the curable composition to become gelatinous was measured in such a manner that the curable composition was stirred with a spatula. This operation was repeated three times and the average thereof was evaluated.
A: 300 seconds or less
B: 300 seconds to 600 seconds
C: 600 seconds or more

### <Measurement of Glass Transition Temperature>

Each curable composition obtained above was poured into a mold with a thickness of 2 mm and was heated at 120 °C for five minutes. An obtained cured product was cut into a piece with a width of 5 mm and a length of 50 mm using a diamond cutter, whereby a test specimen was obtained. Next, the dynamic viscoelasticity of the test specimen was measured by double-end bending using a viscoelastometer ("DMS6100" manufactured by SII Nanotechnology Co., Ltd.) and the temperature at which tan δ peaked was regarded as the glass transition temperature (Tg) and was evaluated. Measurement conditions for dynamic viscoelasticity measurement were as follows: temperature conditions including a heating rate of 3 °C/min from room temperature to 260 °C, a frequency of 1 Hz, and a strain amplitude of 10 µm.

**[Table 1]**

| Example | | | 1 | 2 | 3 | 4 | 5 | 6 | 7 | 8 | 9 | 10 |
|---|---|---|---|---|---|---|---|---|---|---|---|---|
| A | Epoxy resin | 840-S | 100 | 100 | 100 | 100 | 100 | 100 | 100 | 100 | 100 | 100 |
| B | Amine | TETA | | | | | | | | | | 11 |
| | | 1,3-BAC | | | | | | 15 | 15 | 15 | 15 | |
| | | IPDA | 21 | 18 | 14 | 9 | 5 | | | | | |
| | | DETDA | | | | | | | | | | |
| C | Imidazole | 1,2DMZ | 0.4 | 0.4 | 0.8 | 1.5 | 2.0 | 0.4 | 1.0 | | | 0.4 |
| | | 2E4MZ | | | | | | | | 0.4 | 1.0 | |
| Active hydrogen/epoxy group | | H/E | 0.9 | 0.8 | 0.6 | 0.4 | 0.2 | 0.8 | 0.8 | 0.8 | 0.8 | 0.8 |
| Gel time | | Gt/seconds | A | A | A | A | A | A | A | A | A | A |
| Glass transition temperature | | Tg/°C | 161 | 180 | 181 | 197 | 194 | 175 | 162 | 163 | 172 | 177 |

**[Table 2]**

| Comparative Example | | | 1 | 2 | 3 | 4 | 5 | 6 | 7 | 8 |
|---|---|---|---|---|---|---|---|---|---|---|
| A | Epoxy resin | 840-S | 100 | 100 | 100 | 100 | 100 | 100 | 100 | 100 |
| B | Amine | TETA | | | | 13 | | | | |
| | | 1,3-BAC | | | 19 | | | | | |
| | | IPDA | 23 | 18 | | | | 7 | 12 | 17 |
| | | DETDA | | | | | 24 | 17 | 12 | 6 |
| C | Imidazole | 1,2DMZ | 1.0 | | 1.0 | 1.0 | 1.0 | 1.0 | 1.0 | 1.0 |
| | | 2E4MZ | | | | | | | | |
| Active hydrogen/epoxy group | | H/E | 1.0 | 0.8 | 1.0 | 1.0 | 1.0 | 1.0 | 1.0 | 1.0 |
| Gel time | | Gt/seconds | A | B | A | A | C | C | B | A |
| Glass transition temperature | | Tg/°C | 145 | 120 | 140 | 120 | Uncured | Uncured | 131 | 143 |

## Claims

1. A curable composition containing an epoxy resin (A), an aliphatic and/or alicyclic amine compound (B), and an imidazole compound (C), wherein a ratio H/E of the number of moles H of active hydrogen in the aliphatic and/or alicyclic amine compound (B) to the number of moles E of an epoxy group in the epoxy resin (A) is in a range of 0.2 to 0.9.

2. The curable composition according to Claim 1, wherein a viscosity of the epoxy resin (A) at 25 °C is in a range of 1,000 mPa·s to 100,000 mPa·s.

3. The curable composition according to Claim 1 or 2, wherein the ratio H/E of the number of moles H of active hydrogen in the aliphatic and/or alicyclic amine compound (B) to the number of moles E of an epoxy group in the epoxy resin (A) is in a range of 0.3 to 0.8.

4. The curable composition according to any one of Claims 1 to 3, wherein a usage ratio of the imidazole compound (C) is in a range of 0.2 parts by mass to four parts by mass with respect to 100 parts by mass of the epoxy resin (A).

5. The curable composition according to any one of Claims 1 to 4, wherein the imidazole compound (C) is imidazole, 1-methylimidazole, 2-methylimidazole, 1,2-dimethylimidazole, or 2-ethyl-4-methylimidazole.

6. The curable composition according to any one of Claims 1 to 5, wherein the aliphatic and/or alicyclic amine compound (B) is triethylenetetramine, 1,3-bis(aminomethyl)cyclohexane, or isophoronediamine.

7. A cured product of the curable composition according to any one of Claims 1 to 6.

8. The cured product according to Claim 7, having a glass transition temperature of 160 °C or higher.

9. A fiber-reinforced composite material containing, as essential components, the curable composition according to any one of Claims 1 to 6 and reinforcing fibers.

10. A fiber-reinforced resin-molded article containing, as essential components, the cured product according to Claim 7 or 8 and reinforcing fibers.

11. A method for manufacturing a fiber-reinforced resin-molded article, comprising heat-curing the fiber-reinforced composite material according to Claim 9.
